# EUROPEAN PATENT APPLICATION

(11) **EP 1 493 502 A1**
(43) Date of publication of application: **05.01.2005**
(21) Application number: 04253476.8
(22) Date of filing: 10.06.2004
(51) Int. Cl.: B07C 5/34, B07C 5/342, B07C 5/12, B08B 9/46, G01N 21/90

(54) **Container inspection machine with easy access to its optical and electronical components for maintenance**

(30) Priority: 30.06.2003 US 610059
(71) Applicant: Emhart Glass S.A., 6330 Cham (CH)
(72) Inventor: Raupp, Henry F., Freeville New York 13068 (US); Diehr, Richard D., Horseheads New York 14845 (US)
(74) Representative: Warren, Anthony Robert

(57) **Abstract**

A machine is provided for inspecting a container which is being conveyed along a linear path by a conveyor (12). The machine has spaced right and left hand cabinets (C₁, C₂) in front of the linear path, with the space (23) therebetween being a space in which an operator can stand to be proximate to the linear path. The machine has left hand and right hand inspection stations, each including a mirror assembly (54) and a light source assembly (58). The mirror assembly (54) of one of the inspection stations is located in front of the linear path and the light source assembly (54) of the other inspection station is located in front of the linear path. These front mounted assemblies are pivotally mounted about vertical axes so that they can be pivoted from a closed position proximate the linear path (Fig. 5) to a retracted position away from the linear path (Fig. 6). At the retracted position, an operator can enter the space (23) in the machine and service the inspection stations.

## Description

The present invention relates to machines which inspect containers such as bottles for defects and more particularly to such machines wherein a bottle is conveyed through one or more inspection stations via a linear conveyor system.

Machines for inspecting glass bottles and the like are performing more and more inspections using camera technology. In such applications mirrors redirect images to a camera and massive light sources assure proper illumination. Access to this equipment is a high priority in the design of the machine, since the environment within a factory making glass bottles is not clean, requiring periodic cleaning of the light sources, mirrors and camera lenses.

It is an object of the present invention to provide a machine for inspecting glass containers which will make required cleaning of the mirror's, etc. easier.

According to the present invention, there is provided a machine for inspecting containers as defined in claim 1.

The present invention will now be described with reference to the accompanying drawings which illustrate a presently preferred embodiment incorporating the principles of the invention, and in which:
Figure 1 is a schematic oblique view of an inspection machine for inspecting bottles made in accordance with the teachings of the present invention;
Figure 2 is an oblique view of a portion of the machine with the top cover raised and the center doors pushed open;
Figure 3 is an oblique view of a door hinge shown in Figure 2;
Figure 4 is a view similar to that of Figure 2 with all the doors and panels removed;
Figure 5 is a top view of the machine, in the operating mode, with the top cover removed to reveal additional features of the machine; and
Figure 6 is a top view similar to Figure 6, but with the machine in the servicing mode.

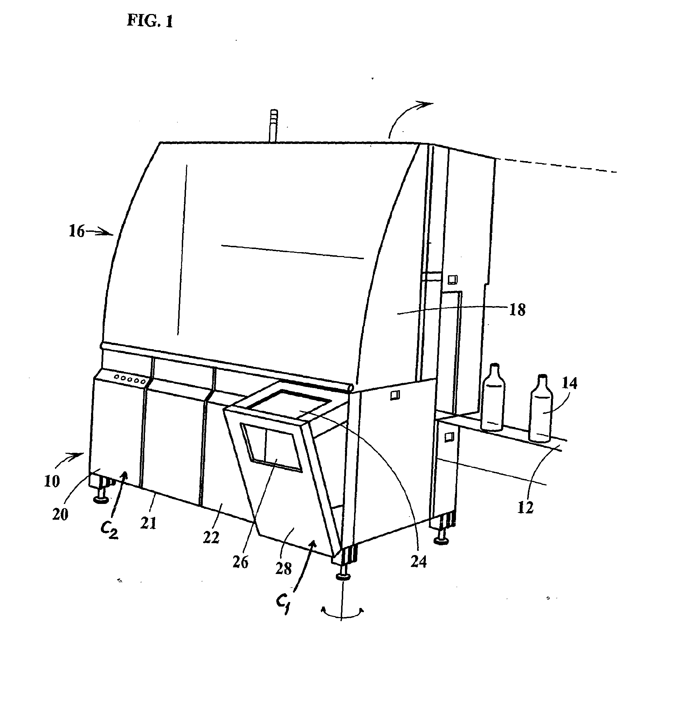

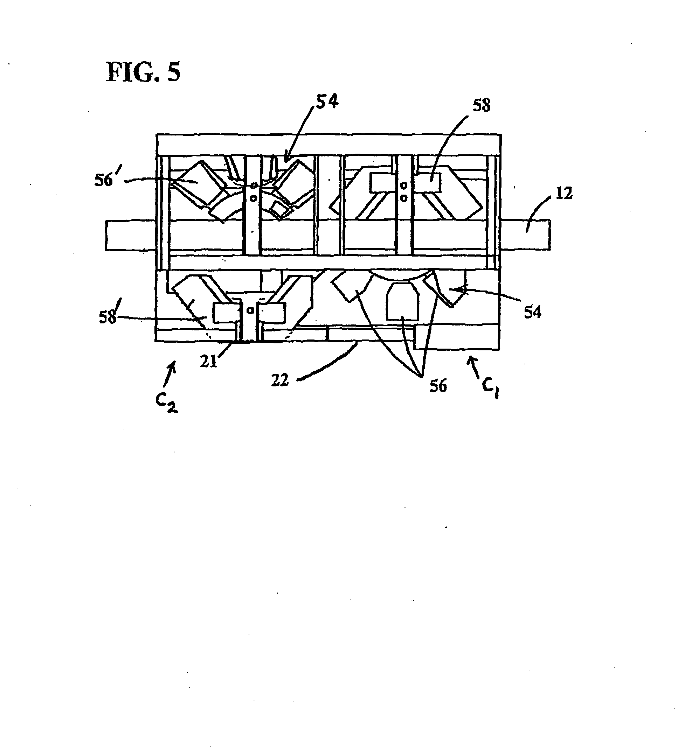

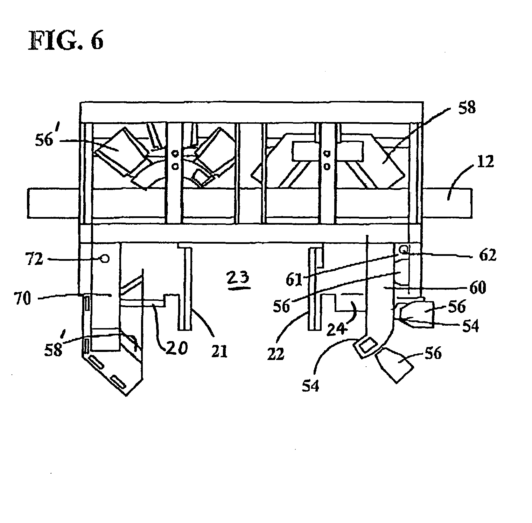

Figure 1 shows a glass container, for example bottle inspection machine 10 which has a conveyor 12 for conveying bottles 14 through the machine. As the bottles proceed through the machine they will pass through any number of inspection stations. A plastic front closure 16 is pivotally mounted across the top so that it can be raised to provide access to the inspection stations of the machine as described later with reference to Figures 5 and 6. This front closure 16 cooperates with two fixed side panels 18 to close the machine.

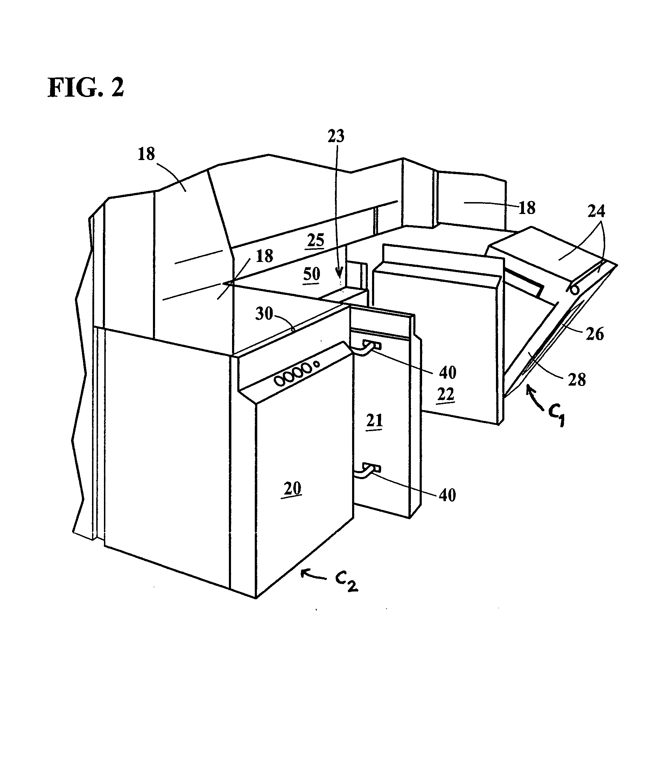

Below the closure are three front panels 20,21,22. The left most panel 20, which is the front panel of the first or left hand cabinet C₂, can be released via a screw 30 (Figure 2) and removed from the frame to provide frontal access to the electronics stored within.

Also below the closure is a second or right hand cabinet C₁ containing a console 24 that can be used by an operator to operate the machine. When not in use the console can be pushed down against the front wall of the cabinet and will be covered by the window 26 in the front wall cover 28 which pivots to a vertical position (see US-A-6,371,580). This structure is secured to the frame via a vertical pivot (not shown) at the right side so that it can pivot outwardly providing frontal access to the electronics stored within.

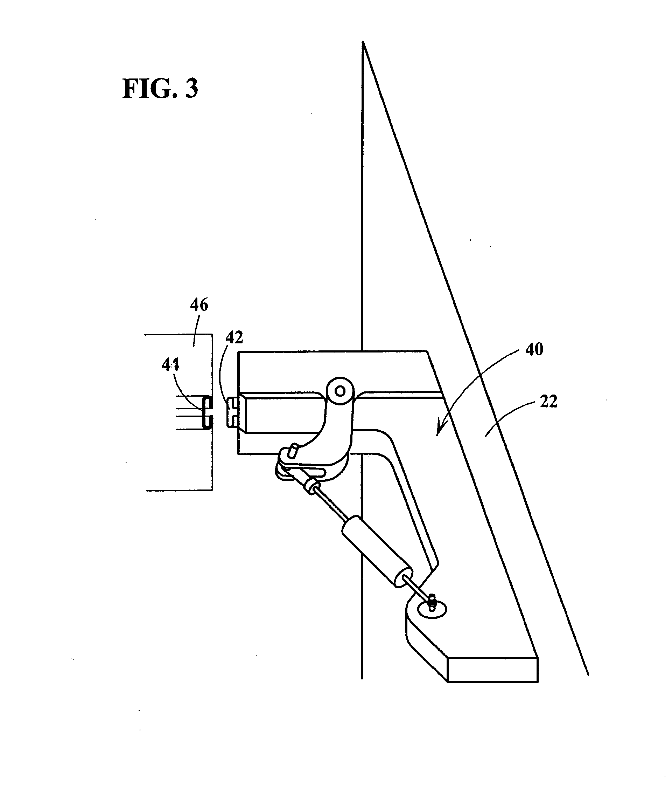

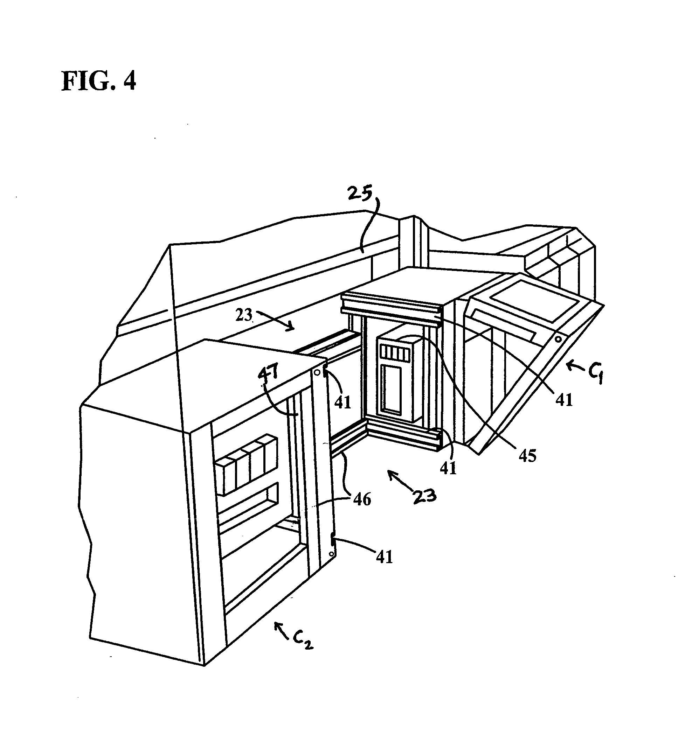

Figure 2 shows that the pair of center panels 21,22 are doors which open inwardly into an open area or chamber 23 into which an operator can enter for working in close proximity with the conveyor path 25. As shown, each door has upper and lower hinges 40, each secured to an elongated key member 42 (Figure 3) which slides into an elongated horizontal keyway 41 which is part of the machine framework 46. As can be seen from Figure 4, since the keyway extends to the front of the machine, each door can be completely removed from the machine by pulling the key 42 out of the keyway 41. With the doors removed the side opening 45 in the right hand cabinet C₁ and the side opening 47 in the left hand cabinet C₂ will be exposed thereby providing access from the side to the cabinets.

Finally, also exposed when the doors are opened is a panel 50 (Figure 2) covering the storage area beneath the conveyor path 25. This panel operates like the front left panel to provide access to the electronics stored behind this panel.

As shown in the plan views of Figures 5 and 6 (in which the front closure and top cover have been removed for clarity), the bottles pass through first, right hand, and second, left hand, inspection stations. The right hand station is defined by a right hand mirror assembly 54 which supports three mirrors 56 and is mounted in front of the conveyor path 25, a light source assembly 58 in the form of a large array of L.E.D.'s which is rigidly mounted behind the conveyor path on the machine frame 46, and a camera system (not shown) also mounted on the machine frame. The left hand station is defined by a mirror assembly 54' which supports three mirrors 56' and which is rigidly mounted behind the conveyor path 25 on the machine frame, a light source assembly 58' in the form of a large array of L.E.D.'s which is mounted in front of the conveyor path, and a camera system (not shown) also mounted on the machine frame.

As can be seen from Figure 6, the right hand mirror assembly 54 is mounted on a horizontal arm 60 which is secured at its end proximate the conveyor path, to a vertical column 61 which is mounted on a pivot shaft 62 located at the right end of the machine. The right hand mirror assembly can therefore be pivotally displaced forwardly and rearwardly over the right hand cabinet containing the console 24, between a retracted service position shown in Figure 6 and the operating position shown in Figure 5. The left end light source assembly 58' is mounted on a horizontal arm 70 which is secured at the interior end to a pivot shaft 72 located at the left end of the machine. The left hand light source assembly can therefore be pivotally displaced forwardly and rearwardly over the left hand cabinet having the front panel 20, between a retracted service position shown in Figure 6 and the operating position shown in Figure 5 where it (like the retracted right hand mirror assembly 54) will be clear of the open area or chamber 23, so that a serviceman can service the conveyor path and the equipment at the first and second inspection stations.

When the machine is in the servicing mode with the left-hand light source assembly and the right hand mirror assembly at their service positions and the front doors 21,22 open, an operator can step into the chamber 23 and conveniently address any issues involving bottles being conveyed along the conveyor, or service/clean all of the mirror and light source assemblies, camera lenses, etc.

## Claims

1. A machine for inspecting a container which is being conveyed along a linear path through first and second inspection stations, comprising
first cabinet means in front of and at or towards one end of the linear path,
second cabinet means in front of and to or towards the other end of the linear path,
an open area in front of the linear path and defined between the first and second cabinet means,
first and second doors,
first mounting means for mounting said first door on the side of said first cabinet means so that said door can be pushed, from a closed position closing half the entry into the open area, to an open position against said side of the first cabinet means,
second mounting means for mounting said second door on the side of said second cabinet means so that said door can be pushed, from a closed position closing the other half of the entry into the open area, to an open position against said side of the second cabinet means,
one of the inspection stations including a first assembly mounted in front of the linear path for pivotal displacement about a generally vertical axis between an operating position proximate to the linear path and a retracted position away from the open area, and
the other inspection station including a second assembly mounted in front of the linear path for pivotal displacement about a generally vertical axis between an operating position proximate to the linear path and a retracted position away from the open area.

2. A machine for inspecting a container according to claim 1, wherein said first assembly is a mirror assembly.

3. A machine for inspecting a container according to claim 1 or 2, wherein said second assembly is a light source assembly.

4. A machine for inspecting a container according to claim 1, 2 or 3, wherein each inspection station includes first and second assemblies.
